# EUROPEAN PATENT APPLICATION

(11) **EP 3 275 522 A1**
(43) Date of publication of application: **31.01.2018**
(21) Application number: 16202654.6
(22) Date of filing: 07.12.2016
(51) Int. Cl.: B01D 11/04

(54) **APPARATUS AND METHOD FOR SUPPLYING PULSE TO SOLVENT EXTRACTION COLUMN**

(30) Priority: 28.07.2016 KR 20160096020
(71) Applicant: Kepco Nuclear Fuel Co., Ltd, Daejeon 34057 (KR)
(72) Inventor: YOUNGMOON, Bae, 34034 Daejeon (KR); YANG, Seungchul, 34121 Daejeon (KR); BYUNGKUK, Lee, 30098 Sejong-si (KR); KWAK, Dongyong, 34130 Daejeon (KR); CHO, Hyunkwang, 34130 Daejeon (KR)
(74) Representative: Kransell & Wennborg KB

(57) **Abstract**

Disclosed are an apparatus and a method for supplying a pulse to solvent extraction column (hereinafter, pulsed column). More particularly, the present invention relates to a low cost apparatus with a simple method for stably supplying a pulse to a pulsed column (10), which is employed as unit equipment in a solvent extraction process. The apparatus for supplying a pulse to the pulsed column having a first solvent inlet (52) and a second solvent outlet (58) at the low part of the pulsed column, and a second solvent inlet (56) and a first solvent outlet (54) at the top part of the pulsed column thereof, includes: a diaphragm pump (20) actuated by using electric power or compressed air, and having a discharge part (42) and a suction part (44), in which one of the discharge part and the suction part is blinded while the remaining one thereof is connected to the pulsed column via a pulse supply line (40).

## Description

### CROSS REFERENCE TO RELATED APPLICATION

The present application claims priority to Korean Patent Application No. 10-2016-0096020, filed July 28, 2016, the entire contents of which is incorporated herein for all purposes by this reference.

### BACKGROUND OF THE INVENTION

### Field of the Invention

The present invention relates generally to an apparatus and a method for supplying a pulse to a solvent extraction column(hereinafter, pulsed column). More particularly, the present invention relates to a low cost apparatus with a simple method for stably supplying a pulse to a pulsed column, which is employed as unit equipment in a solvent extraction process.

### Description of the Related Art

In general, solvent extraction process is employed in separation and refinement of a desired solute, in which the desired solute is selectively extracted from inert materials by a method of transferring a desired solute dissolved in a solvent to an extracting solvent. Particularly, such solvent extraction process is a core process of nuclear fuel production, and thus is applied to the front-end step and the back-end step of the nuclear fuel cycle

In the front-end step of the nuclear fuel cycle, solvent extraction process is employed in separation and refinement of uranium from an aqueous nitric acid or a sulfuric acid solution containing dissolved uranium by using an extracting solvent. Further, in the back-end step of the nuclear fuel cycle, solvent extraction process is employed in separation and refinement of uranium or plutonium from an aqueous nitric acid solution dissolved spent nuclear fuel.

Herein, tributyl phosphate (C₁₂H₂₇O₄P) in a hydrocarbon-based solvent having high radiation stability is employed as an extracting solvent to separate and refine uranium. Further, this extracting solvent has high selectivity for uranium or plutonium, and is capable of easily separating an aqueous phase and an organic phase.

Moreover, unit equipment for treating nuclear fuel materials uses geometry control in consideration of nuclear criticality safety control, so it requires equipment having a small size and high reliability. Further, in order to prevent a extracting solvent from radiation damage due to contact between an extracting solvent and a radioactive material, it requires that contact time of an extracting solvent and a radioactive material be reduced as much as possible in a pulsed column.

In recent years, a mixer-settler, a pulsed column, a centrifugal extractor, etc. are employed as unit equipment for solvent extraction process in nuclear fuel production.

Among these, Pulsed columns are generally used in the front-end step and the back-end step of the nuclear fuel cycle, and is advantageous in that it is possible to achieve continuous operation thereof, and reduction in radiation damage to an extracting solvent due to a short residence time of solvents in a pulsed column.

However, the conventional solvent extraction process using pulsed columns is problematic in that the apparatus for supplying a pulse to the pulsed column requires high costs, and it is difficult to achieve stable operation of a pulsed column due to difficulty in control of the pulse supply.

Moreover, the conventional solvent extraction process using pulsed columns is further problematic in that as capacity of the pulsed column is increased, investment costs and an installation area of the apparatus for supplying a pulse are increased. Thus, the apparatus is not easily applied for use.

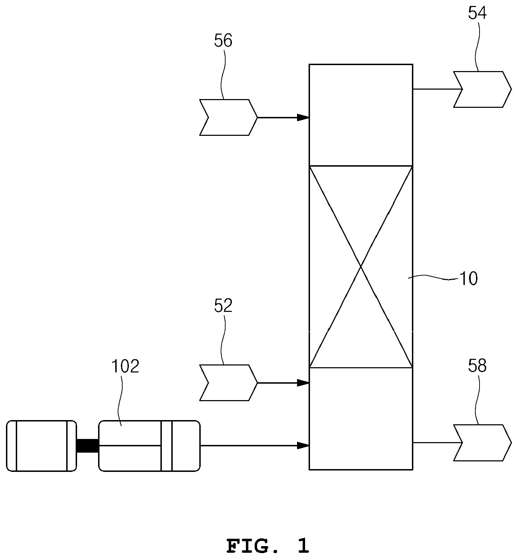

FIG. 1 shows a pulsed column 10 including a conventional apparatus 102 for supplying a pulse. As shown in FIG.1, in the pulsed column 10 including the conventional apparatus 102 for supplying a pulse, the apparatus 102 for supplying a pulse is installed at the same height as a position where the pulsed column 10 is placed, thereby increasing design capacity of the apparatus 102 for supplying a pulse. Further, resistance against the apparatus 102 for supplying a pulse is increased, so it is difficult to achieve stable operation thereof in solvent extraction process.

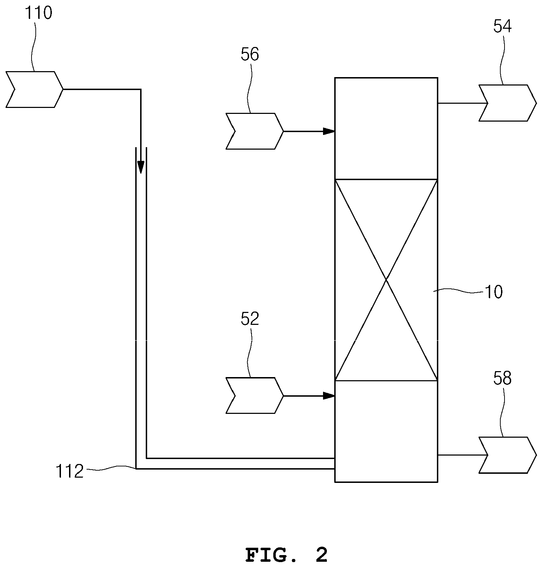

Further, FIG. 2 shows an apparatus for supplying a pulse to a pulsed column by using compressed air. In this case, the pulse is supplied to the pulsed column via a pulse leg 112 by using compressed air supplied from a compressed air supply part 110. Accordingly, a pulse is generated by pressure of a compressive fluid, so it is difficult to stably supply the pulse to the pulsed column.

As such, absence of a stable pulse causes channeling of fluid in the pulsed column and flooding of fluid at the top part of the pulsed column thereof. Thus, there is a problem in that it leads to reduction in stability and efficiency of solvent extraction process.

Therefore, in consideration of easy operation of the pulsed column and economic feasibility, there is a requirement of providing a low cost apparatus with a simple method for stably supplying a pulse to the pulsed column.

The foregoing is intended merely to aid in the understanding of the background of the present invention, and is not intended to mean that the present invention falls within the purview of the related art that is already known to those skilled in the art.

### Documents of Related Art

(Non-Patent document 1) Burkhart, L. E., and Fahien, R. W. Pulse Column Design. Ames Laboratory, 1958.

### SUMMARY OF THE INVENTION

Accordingly, the present invention has been made keeping in mind the above problems occurring in the related art, and the present invention is intended to propose a low cost apparatus and a simple method for stably supplying pulse to a pulsed column that is employed as unit equipment in solvent extraction process.

Further, another object of the present invention is to propose an apparatus that stably supplies a pulse to a pulsed column, thereby preventing channeling of fluid in the pulsed column and preventing flooding of fluid at the top part of the pulsed column thereof in solvent extraction process.

The present invention is not limited by the above mentioned object and other unmentioned objects can be clearly understood by those having ordinary skill in the technical field to which the present invention pertains from the following description.

In order to achieve the above object and to realize the characteristic configuration of the present invention to be described below, the features of the present invention are as follows:
According to an embodiment of the present invention, there is provided an apparatus for supplying a pulse to a pulsed column, in which the pulsed column is provided with a first solvent inlet and a second solvent outlet at the low part of the pulsed column thereof, and a second solvent inlet and a first solvent outlet at the top part of the pulsed column thereof, the apparatus including: a diaphragm pump actuated by using electric power or compressed air, and having a discharge part and an suction part, wherein one of the discharge part and the suction part is blinded while the remaining one of the discharge part and the suction part is connected to the pulsed column via a pulse supply line.

Further, according to one aspect of the present invention, the diaphragm pump may be installed at a position higher than a height where the pulsed column is placed.

Further, according to another aspect of the present invention, capacity of the apparatus may be determined based on at least one of capacity and hydraulic head of the diaphragm pump. Preferably, the capacity of the diaphragm pump may be determined based on a value that is calculated by multiplying the required pulse amplitude by an internal cross-sectional area of the pulsed column. Preferably, the hydraulic head of the diaphragm pump may be determined depending on a height of the pulsed column and an installation position of the diaphragm pump.

According to an embodiment of the present invention, there is provided a method of supplying a pulse to a pulsed column, the method including: determining capacity of an apparatus for supplying the pulse, the apparatus including a diaphragm pump; blinding one of a discharge part and an suction part of the diaphragm pump; installing the diaphragm pump at a position higher than a height where the pulsed column is placed; connecting the remaining one of the discharge part and the suction part with a pulse supply line to which the pulsed column is connected; and actuating the diaphragm pump by using electric power or compressed air.

Preferably, the capacity of the apparatus may be determined based on at least one of capacity and hydraulic head of the diaphragm pump.

According to the present invention, in a uranium separation and refinement process in which uranium is separated and refined from an aqueous nitric or sulfuric acid solution containing dissolved uranium by using an extracting solvent, the solvent extraction column can be stably operated without channeling of fluid in the pulsed column, and flooding of fluid at the top part of the pulsed column thereof.

Further, according to a result of an experiment carried out to separated and refined uranium from a nitric acid solution containing uranium and impurities, an extraction efficiency of about 90.2% is obtained. Thus, the result that fully satisfies the specification of impurities for uranium dioxide used in nuclear fuel production cab be achieved.

Therefore, when supplying a pulse to the pulsed column according to the present invention, the present invention can achieve reduction in investment costs for solvent extraction process compared with a conventional apparatus for supplying a pulse. Further, the present invention enables a stable operation of the pulsed column with a simple method.

### BRIEF DESCRIPTION OF THE DRAWINGS

FIG. 1 is a view showing a pulsed column that includes an apparatus for supplying a pulse thereto in the related art.
FIG. 2 is a view showing a pulsed column that is supplied with a pulse by using compressed air in the related art.
FIG. 3 is a view showing a pulsed column that includes an apparatus for supplying a pulse thereto according to an embodiment of the present invention.
FIG. 4 is a view showing an apparatus and a method for supplying a pulse to a pulsed column.

### DETAILED DESCRIPTION OF THE INVENTION

Specific structural and functional descriptions of embodiments of the present invention disclosed herein are only for illustrative purposes of the embodiments of the present invention. The present invention may be embodied in many different forms without departing from the spirit and significant characteristics of the present invention. Therefore, the embodiments of the present invention are disclosed only for illustrative purposes and should not be construed as limiting the present invention.

It will be understood that, although the terms first, second, etc. may be used herein to describe various elements, these elements should not be limited by these terms. These terms are only used to distinguish one element from another element. For instance, a first element discussed below could be termed a second element without departing from the teachings of the present invention. Similarly, the second element could also be termed the first element.

It will be understood that when an element is referred to as being "coupled" or "connected" to another element, it can be directly coupled or connected to the other element or intervening elements may be present therebetween. In contrast, it should be understood that when an element is referred to as being "directly coupled" or "directly connected" to another element, there are no intervening elements present. Other expressions that explain the relationship between elements, such as "between", "directly between", "adjacent to", or "directly adjacent to", should be construed in the same way.

Throughout the drawings, the same reference numerals will refer to the same or like parts. The terminology used herein is for the purpose of describing particular embodiments only and is not intended to be limiting. As used herein, the singular forms "a", "an", and "the" are intended to include the plural forms as well, unless the context clearly indicates otherwise. It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof.

An apparatus for supplying a pulse to a pulsed column according to the present invention, in which the pulsed column is provided with a first solvent inlet and a second solvent outlet at the low part of the pulsed column thereof, and a second solvent inlet and a first solvent outlet at the top part of the pulsed column thereof, may include: a diaphragm pump actuated by using electric power or compressed air, and having a discharge part and a suction part, in which one of the discharge part and the suction part is blinded while the remaining one of the discharge part and the suction part is connected to the pulsed column via a pulse supply line.

Hereinafter, the present invention will be described in detail with reference to accompanying drawings.

In this specification, a pulsed column using a pulse, which is employed as unit equipment in a solvent extraction process, will refer to a pulsed column.

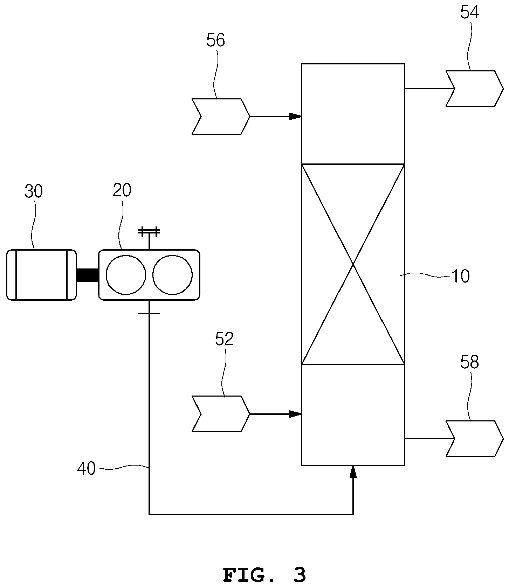

As shown in FIG. 3, the pulsed column 10 is provided with a first solvent outlet 54 and a second solvent inlet 56 in at the top part of the pulsed column thereof, and the first solvent inlet 52 and the second solvent outlet 58 at the low part of the pulsed column thereof. In other words, a first solvent flows from the first solvent inlet 52 to the first solvent outlet 54, and a second solvent different from the first solvent flows from the second solvent inlet 56 to the second solvent outlet 58.

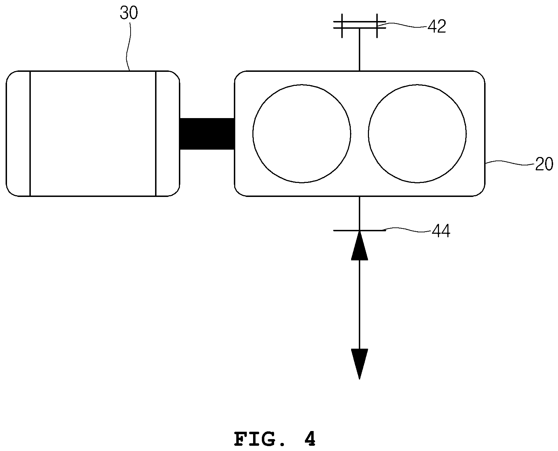

As shown in FIG. 4, the apparatus for supplying a pulse, which includes the diaphragm pump 20 and a driving part 30, is connected to the pulsed column 10 via the pulse supply line 40. Preferably, the driving part 30 may be actuated by using compressed air or electric power.

The diaphragm pump 20 is provided with the discharge part 42 and the suction part 44. Here, one of the discharge part 42 and the suction part 44 of the apparatus for supplying a pulse or the diaphragm pump 20 is blinded while the remaining one of the discharge part 42 and the suction part 44 is connected to the pulsed column 10 via the pulse supply line 40, such that fluid of the pulsed column 10 reciprocates therein. For convenience of description, although the specification and the drawing show that the discharge part 42 is blinded, it will be obvious that the suction part 44 may be blinded.

As shown in FIG. 3, the apparatus for supplying a pulse to the pulsed column or the diaphragm pump 20 according to the present invention is installed at a position higher than a height where the pulsed column 10 is placed. Preferably, the diaphragm pump 20 is installed at a position higher than a height where a packing inside a body of the pulsed column 10 is placed.

Next, prior to operating the pulsed column 10, the apparatus for supply a pulse can be designed and installed to perform a method of supplying a pulse to the pulsed column 10 according to an embodiment of the present invention.

The method of supplying a pulse to the pulsed column 10 according to the embodiment of the present invention, may include: determining capacity of an apparatus for supplying a pulse, the apparatus including a diaphragm pump 20; blinding one of a discharge part 42 and an suction part 44 of the diaphragm pump 20; installing the diaphragm pump 20 at a position higher than a height where the pulsed column 10 is placed; connecting the remaining one of the discharge part 42 and the suction part 44 with a pulse supply line 40 to which the pulsed column 10 is connected; and actuating the diaphragm pump 20 by using electric power or compressed air.

Further, the method of supplying a pulse to the pulsed column 10 according to the embodiment of the present invention may include determining capacity of the apparatus having the diaphragm pump 20 for supplying a pulse. Here, the capacity of the apparatus is determined based on capacity and hydraulic head of the diaphragm pump 20 that is actuated by using compressed air or electric power required for operation of the pulsed column 10. Here, the capacity of the diaphragm pump 20 is determined based on a value that is calculated by multiplying the required pulse amplitude by an internal cross-sectional area of the pulsed column 10 considering a design margin. Further, the hydraulic head of the diaphragm pump 20 is designed considering a height of the pulsed column 10 and an installation position of the diaphragm pump 20. Moreover, stable supply of a pulse to the pulsed column 10 may be possible when maintaining soundness by reducing resistance against a diaphragm of the diaphragm pump 20 through the method of determining appropriate capacity of the diaphragm pump 20 and making the installation position of the diaphragm pump 20 higher. Accordingly, stable supply of a pulse to the pulsed column 10 and operation thereof are implemented by selecting the diaphragm pump 20 having proper capacity and hydraulic head suitable for the solvent extraction process, and installing the apparatus for supplying the pulse at a position where resistance against the diaphragm in the diaphragm pump 20 is reduced.

Next, the method of supplying a pulse to the pulsed column 10 according to the embodiment of the present invention may include blinding one of the discharge part 42 and the suction part 44 of the diaphragm pump 20, and connecting the remaining one of the discharge part 42 and the suction part 44 with the pulse supply line 40 to which the pulsed column 10 is connected.

Further, the method of supplying a pulse to the pulsed column 10 according to the embodiment of the present invention may include installing the diaphragm pump 20 at a position higher than a height where the pulsed column 10 is placed. Here, in order to reduce resistance against the diaphragm of the apparatus for supplying a pulse, the diaphragm pump 20 is installed at the position higher than the height where the pulsed column 10 is placed or the height where the packing inside the body of the pulsed column 10 is placed. Thus, the diaphragm of the apparatus for supplying a pulse is naturally filled with fluid of the pulsed column 10, thereby preventing malfunction of the apparatus for supplying a pulse due to dry-run of the diaphragm pump 20.

According to the apparatus and the method for supplying a pulse to the pulsed column 10 of the present invention, the discharge part 42 or the suction part 44 of the diaphragm pump 20 actuated by compressed air and electric power is blinded and is connected to a nozzle of the pulse supply line 40 in the pulsed column 10. Further, resistance against the diaphragm in the apparatus is reduced with a change of the height where the apparatus is installed, thereby stably supplying the pulse to the pulsed column 10. Thus, the apparatus can achieve stable operation by using the pulsed column 10 with a cost of only 10% of the conventional apparatus for supplying a pulse.

Further, according to a result of an experiment carried out to separate and refine uranium from a nitric acid solution containing uranium and inert materials, an extraction efficiency of about 90.2% is obtained. Moreover, a result that fully satisfies the specification of impurities for uranium dioxide used in nuclear fuel production can be achieved.

Although a preferred embodiment of the present invention has been described for illustrative purposes, those skilled in the art will appreciate that various modifications, additions and substitutions are possible, without departing from the scope and spirit of the invention as disclosed in the accompanying claims.

## Claims

1. An apparatus for supplying a pulse to a pulsed column (10), wherein the pulsed column is provided with a first solvent inlet (52) and a second solvent outlet (58) at the low part of the pulsed column thereof, and a second solvent inlet (56) and a first solvent outlet (54) at the top part of the pulsed column thereof, the apparatus comprising:
a diaphragm pump (20) actuated by using electric power or compressed air, and having a discharge part (42) and a suction part (44), wherein one of the discharge part and the suction part is blinded while a remaining one of the discharge part and the suction part is connected to the pulsed column via a pulse supply line (40).

2. The apparatus of claim 1, wherein the diaphragm pump (20) is installed at a position higher than a height where the pulsed column (10) is placed.

3. The apparatus of claim 1, wherein capacity of the apparatus is determined based on at least one of capacity and a hydraulic head of the diaphragm pump (10).

4. The apparatus of claim 3, wherein the capacity of the diaphragm pump is determined based on a value that is calculated by multiplying a required pulse amplitude by an internal cross-sectional area of the pulsed column (10).

5. The apparatus of claim 3, wherein the hydraulic head of the diaphragm pump is determined depending on a height of the pulsed column (10) and an installation position of the diaphragm pump (20).

6. A method of supplying a pulse to a pulsed column (10), the method comprising:
determining capacity of an apparatus for supplying a pulse, the apparatus including a diaphragm pump (20);
blinding one of a discharge part (42) and a suction part (44) of the diaphragm pump (20);
installing the diaphragm pump (20)at a position higher than a height where the pulsed column (10) is placed;
connecting a remaining one of the discharge part (42) and the suction part (44) with a pulse supply line (40) to which the pulsed column (10) is connected; and
actuating the diaphragm pump (20) by using electric power or compressed air.

7. The method of claim 6, wherein the capacity of the apparatus is determined based on at least one of capacity and hydraulic head of the diaphragm pump (20).
